# EUROPÄISCHE PATENTSCHRIFT

(11) **EP 1 231 843 B1**
(45) Veröffentlichungstag und Bekanntmachung des Hinweises auf die Patenterteilung: **17.09.2003**
(21) Anmeldenummer: 00987088.2
(22) Anmeldetag: 07.11.2000
(51) Int. Cl.: A23G 9/12, A23G 9/16

(54) **VORRICHTUNG ZUR DISKONTINUIERLICHEN HERSTELLUNG VON SPEISEEIS**
DEVICE FOR THE DISCONTINUOUS PRODUCTION OF ICE-CREAM
DISPOSITIF POUR PRODUIRE DE LA CREME GLACEE DE MANIERE DISCONTINUE

(30) Priorität: 23.11.1999 DE 19956201
(43) Veröffentlichungstag der Anmeldung: 21.08.2002
(73) Patentinhaber: Rischewski, Marcus, 75210 Keltern-Dietlingen (DE)
(72) Erfinder: Rischewski, Marcus, 75210 Keltern-Dietlingen (DE)
(74) Vertreter: Frank, Gerhard, Dipl.-Phys.
(86) Internationale Anmeldenummer: DE0003891
(87) Internationale Veröffentlichungsnummer: WO01037676

(56) Entgegenhaltungen:
- EP-A- 0 445 396
- EP-A- 0 495 211
- DE-A- 19 802 852
- FR-A- 2 542 578
- US-A- 4 265 921
- US-A- 4 643 583
- US-A- 4 669 275
- US-A- 4 680 944
- US-A- 4 736 600
- US-A- 4 860 550
- US-A- 5 018 363
- US-A- 5 617 734
- US-A- 5 845 512
- PATENT ABSTRACTS OF JAPAN vol. 1999, no. 14, 22. Dezember 1999 (1999-12-22) & JP 11 262361 A (SANYO ELECTRIC CO LTD), 28. September 1999 (1999-09-28)
- PATENT ABSTRACTS OF JAPAN vol. 015, no. 056 (C-0804), 8. Februar 1991 (1991-02-08) & JP 02 286045 A (MATSUSHITA ELECTRIC IND CO LTD), 26. November 1990 (1990-11-26)

## Beschreibung

### Hintergrund der Erfindung

Die Erfindung betrifft eine Vorrichtung gemäß dem Oberbegriff des Patentanspruchs 1 sowie ein Verfahren zur Herstellung von Speiseeis mit dieser Vorrichtung. Die bekannten Maschinen zur Herstellung von Speiseeis kommen in der handwerklichen Eisherstellung zum Einsatz bspw. in Eisdielen.

Das Grundprinzip ist bei allen Maschinen gleich: durch ein Verarbeitungswerkzeug wird das im Verarbeitungsbehälter befindliche Flüssigkeitsgemisch teilweise immer wieder auf die gekühlte Wandung des Verarbeitungsbehälters aufgetragen, dort abgekühlt , gefroren und wieder abgekratzt und somit dem noch nicht gefrorenen Flüssigkeitsgemisch wieder zugeführt; ist die gesamte Menge des Flüssigkeitsgemischs zu einer Speiseeismasse mit der gewünschten Konsistenz und Qualität gefroren ,erfolgt die Entnahme aus dem Verarbeitungsbehälter.

### Stand der Technik

Bei den bekannten diskontinuierlich arbeitenden Maschinen unterscheidet man solche, die mit rotierendem vertikalem Kessel mit gekühlter Wandfläche ausgestattet sind, aus dem das fertige Speiseeis mit einem großen Spatel herausgenommen werden muß und solche, die einen in der Horizontalen liegenden Produktionskessel haben und mittels eines Verarbeitungwerkzeugs das fertige Speiseeis ausstoßen.

Die DE -U- 84 38 146.9 zeigt einen Vertreter der erstgenannten Gattung mit den typischen Nachteilen: Zugabe und Entnahme erfolgen von der Oberseite des aus der Vertikalen geringfügig geneigten Verarbeitungsbehälters her, zur Herausnahme des fertigen Speiseeises mit dem Spatel wird eine gelemte Fachkraft benötigt, denn es ist nicht ungefährlich, aus dem rotierenden Kessel das Speiseeis zu entnehmen. Kennzeichnend für diese vertikal arbeitenden Maschinen ist die ständige Uberwachung des Gefrier-Produktionsvorgangs und lange Produktionszeiten; das Bearbeiten des Speiseises und das Reinigen des Kessels mit den Händen und Unterarmen im tiefkalten, feuchten Bereich führt zu bekannten Gesundheitsschäden; der Vorteil dieses klassischen Maschinentyps besteht in einer gut durchgekneteten Struktur und einer sehr niedrigen Temperatur des fertigen Speiseeises.

Es hat daher nicht an Versuchen gefehlt, eine ähnlich gute Speiseeisqualität mit anderen Konstruktionsprinzipien zu erzielen:

Die DE-OS 3307016 zeigt eine gattungsgemäße Vorrichtung, bei der der Verarbeitungsbehälter liegend angeordnet ist, bei dieser Vorrichtung liegt die Längsachse des zylindrischen Behälters l in der Horizontalen. Am Handhabungsende der Vorrichtung ist diese mit einem Deckel abgeschlossen, in dem sich ein Einfülltrichter zur Eingabe des Flüssigkeitsgemischs und eine Entnahmeöffnung zur Entnahme des fertigen Speiseeises befinden. Die Werkzeuge zur Verarbeitung des Flüssigkeitsgemischs sind mehrteilig ausgebildet: ein rotierendes Element dient zum Bestreichen der Wandung des Verarbeitungsbehälters mit dem Flüssigkeitsgemisch, ein ebenfalls rotierendes und zusätzlich in der Längsachse des Versrbeitungsbehälters axial hin- und herlaufendes Knet- und Ausstosselement dient mittels Abschabelementen der Knetung der sich bildenden Speiseeismasse , dem permanenten Abkratzen des auf die Innenwandung aufgetragenen Flüssigkeitsgemischs und schließlich dem Auswurf des fertigen Speiseeises durch die Entnahmeöffnung.

Bei dieser Maschine mit horizontalem Verarbeitungsbehälter wird die Verarbeitung des Flüssigkeitsgemischs mit geringer Drehzahl durchgeführt, zum Ausstoß des fertigen Speiseeises wird die Drehzahl erhöht, um diesen Vorgang zu beschleunigen und Auftaueffekte zu verhindern .Mit dieser Vorrichtung wird jedoch ein Speiseeis mit unbefriedigender Qualität erzeugt, da es durch den geringen Durchmesser des Verarbeitungsbehälters und der im Vergleich recht hohen Rotationsgeschwindigkeit wenig Zeit hat, an der Wandung des Verarbeitungsbehälters anzufrieren, es darf bei dieser Maschine auch nicht zu festgefroren werden, um das Eis noch aus dem Verarbeitungskessel mit dem Ausstosselememt bei hoher Drehzahl von hinten nach vorne durch die Entnahmeöffnung heraus zu fördern.
Durch die hohe Auswurfgeschwindigkeit und den geringen Querschnitt der Entnahmeöffnung wird der gefrorenen Speiseeismasse Reibungswärme zugeführt, die die Speiseeismasse erwärmt und die Struktur und das Gefüge des Eises wieder abzubauen beginnt; die Entleerung des Verarbeitungsbehälters ist nur unvollständig. Schließlich ist der konstruktive Aufbau der gattungsgemässen Vorrichtung sehr aufwendig im Verhältnis zu dem nicht vollständig zufriedenstellenden Ergebnis.

Die gattungsbildende EP 0 495 211 A1 zeigt eine Mehrzweck-Vorrichtung, die auch zur diskontinuierlichen Herstellung von Speiseeis einsetzbar ist, bei der der Verarbeitungsbehälter horizontal angeordnet ist. Am Handhabungsende der Vorrichtung ist diese mit einem Deckel abgeschlossen, in dem sich ein Einfülltrichter zur Eingabe des Flüssigkeitsgemischs und eine verschließbare Entnahmeöffnung zur Entnahme des fertigen Speiseeises befinden. Die Werkzeuge zur Verarbeitung des Flüssigkeitsgemischs bestehen aus einem Rührwerk mit drei Spatein.

Die bekannten Speiseeismaschinen benötigen aufgrund ihrer Konstruktion mit vielen Bauteilen einen großen Reinigungsaufwand, da viele Fugen, offene Kanten und Abdichtungen (Beispiel: ein fest angebrachtes Auslaufbisch) vornanden sind, die unmittelbar mit dem Speisseis in Berührung kommen . Sie bilden somit einen guten Nährboden für gefährliche Bakterien, z. B. Salmonellen. Die bekannten Maschinen sind aus diesem Grund in hygienischer "Hinsicht bedenklich, da der erforderliche Aufwand für die Reinigung, sofern überhaupt praktisch durchführbar, aus Zeitgründen nicht immer getrieben wird. Auch der Einsatz geeigneter Chemikalien zur Reinigung ist aus hygienischen und ökologischen Gründen nicht wünschenswert. Auch die Aufnahme des fertigen Speiseeises nach der Abgabe aus der Entnahmeöffnung ist bei den bekannten Maschinen nicht zufriedensteilend gelöst.

Die meisten am Markt üblichen Speiseeiemaschinen verfügen nur über einen Wannenabsteller. auf dem die Wanne wackelig (Eiswannenböden sind immer gewölbt) und meistens zu tief auf einer unhygienischen Gummiunterlage abgestellt wird; es wird immer eine Hand benötigt, um die Wanne in einer zur Einfüllung des fertigen Speiseeises gesigneten Position zu fixieren und zu halten. Diese Arbeitsabläufe sind mühsam und beeinträchtigen die Gesundheit des Bedienungspersonals.

Für die groben Zutaten, die bestimmten Speiseeissorten bei der Entnahme zugegeben werden, bletet kein Hersteller derzeit ein praktikable Lösung an.

### Darstellung der Erfindung

Es ist Aufgabe der Erfindung, die gattungsgemässe Vorrichtung so weiter zu bilden, dass eine Verbesserung der Speiseeisqualität erreicht wird. Diese Aufgabe wird erfindungsgemäß mit den Merkmalen des Patentanspruchs 1 gelöst.

Der Grundgedanke der Erfindung besteht im Zusammenwirken der Neigung des Verarbeitungsbehälters mit den ausschließlich rotierend arbeitenden Werkzeugen, die dadurch sowohl zur Verarbeitung des Flüssigkeitsgemischs zu Speiseeis, als auch zum Ausstossen des fertigen Speiseeises verwendet werden können.

Vorteilhafte Ausgestaltungen der erfindungsgemäßen Lösung sind den Unteransprüchen zu entnehmen.

### Kurze Erläuterung der Zeichnungen

Ein bevorzugtes Ausführungsbeispiel der erfindungsgemäßen Vorrichtung wird nun anhand von Zeichnungen näher erläutert, es zeigen:
- Figur 1:: Einen schematischen Längsschnitt durch die Vorrichtung,
- Figur 2:: eine teilweise aufgeschnittene, perspektivische Darstellung des Verarbeitungsbehälters der Vorrichtung,
- Figur 3:: eine perspektivische Teildarstellung eines Spatels im Verarbeitungsbehälter,
- Figuren 4A bis 4C:: Längsschnitte durch den Verarbeitungsbehälter mit Deckel während verschiedener Verarbeitungszustände,
- Figur 5:: eine Perspektivdarstellung des Trichters und dessen Verschlusselement,
- Figur 6:: eine Perspektivdarstellung der Entnahmeöffnung und deren Verschlusselement.

### Beschreibung des bevorzugten Ausführungsbeispiels

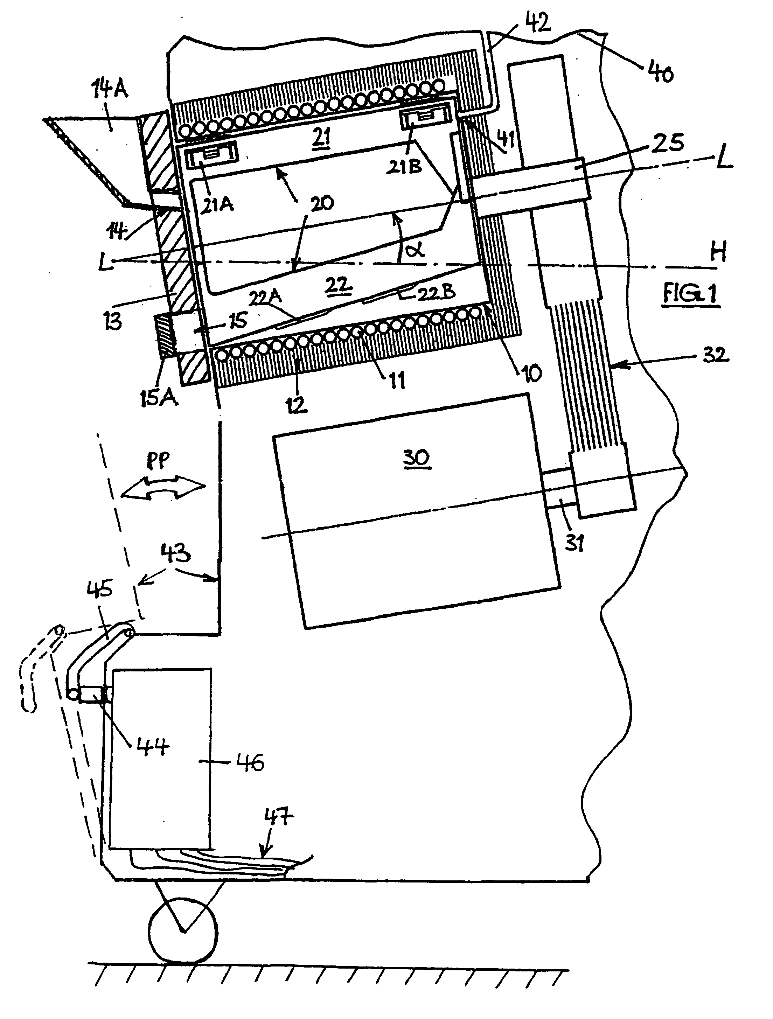

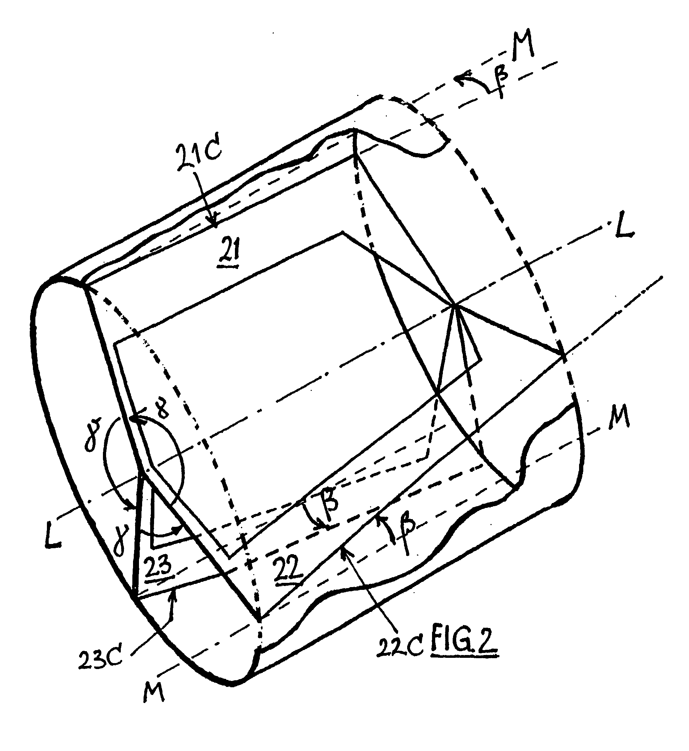

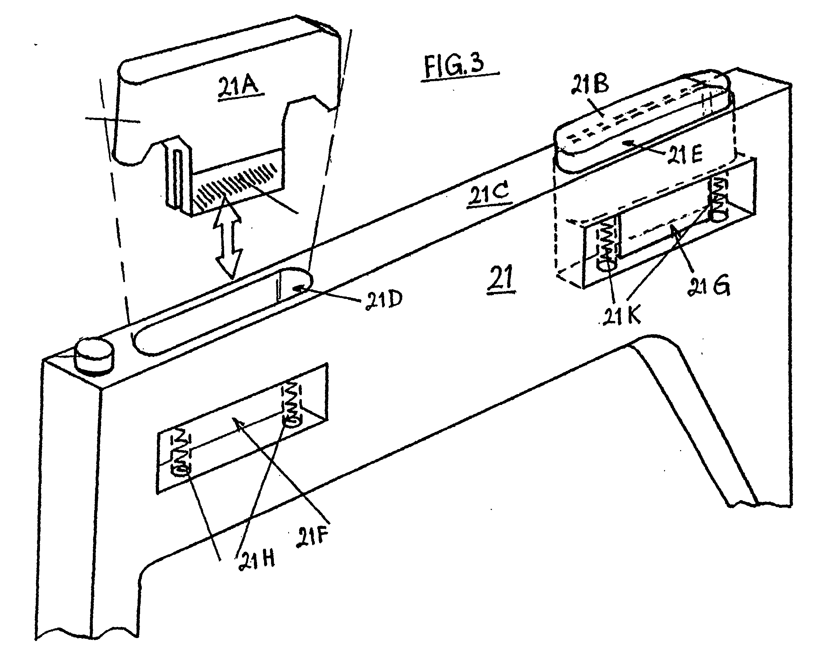

Figur 1 zeigt die wesentlichen Bestandteile einer Vorrichtung zur Herstellung von Speiseeis gemäß der Erfindung; in einem Gehäuse 40 ist ein Verarbeitungsbehälter 10 vorzugsweise aus Edelstahl derart gehalten, vorzugsweise eingeschweißt, dass seine Längsachse L-L mit der Horizontalen einen ersten spitzen Winkel α einschließt, der bei etwa 20° liegt. Innerhalb dieses zylindrischen Verarbeitungsbehälters 10 dreht sich um dessen Längsachse L-L ein Werkzeug 20, dessen Antriebswelle 25 mittels eines Riemengetriebes 32 mit der Motorwelle 31 eines Motors 30 gekoppelt ist. Beim dargestellten Ausführungsbeispiel bewirkt das Riemengetriebe 32 eine Untersetzung der Motordrehzahl etwa im Verhältnis 1 zu 5.

Das Werkzeug 20 selbst ist von der offenen Seite des Verarbeitungsbehälters 10 her in die Antriebswelle 25 einsteckbar und kann beispielsweise für Reinigungszwecke leicht entnommen werden.

Unterhalb des Verarbeitungsbehälters 10 befindet sich ein Frontblech 43 an der Vorderseite des Gehäuses 40, über die sämtliche Schalteinrichtungen der Vorrichtung zugänglich sind.

Die Schalteinrichtungen sind in einem Schaltkasten 46 untergebracht, von dem aus Steuer- und Versorgungskabel 47 nnerhalb des Gehäuses 40 an die entsprechenden Bauteile verteilt werden. Der Schaltkasten 46 ist an der Innenseite des Frontblechs 43 gehalten, das nach vorne verschwenkbar ist (Doppelpfeil PP in Figur 1). Damit wird der Schaltkasten 46 für Reparatur- oder Inspektionszwecke leicht zugänglich. Eine (nicht dargestellte) Sicherheitskette begrenzt den Öffnungswinkel des Frontblechs 43 auf maximal 90°. Das Frontblech 43 kann dann auch ggf. ausgehängt und mit dem Schaltkasten 46 auf den Boden gelegt werden.

Der Verarbeitungsbehälter 10 ist von einer Kühleinrichtung umschlossen, die, wie in den Figuren schematisch dargestellt, aus Kühlschlangen 11 und einer sich darüber erstreckenden Isolierung 12 besteht.

Zu Reinigungszwecken ist eine Einrichtung zur Beaufschlagung der Außenwandung des Verarbeitungsbehälters 10 mit Heißgas vorgesehen, sowie mindestens eine Einspritzdüse 41 in den Verarbeitungsbehälter 10 zur Einspritzung einer Reinigungsflüssigkeit von einer Leitung 42 in den Innenraum des Verarbeitungsbehälters 10.

Die nach unten zeigende, offene Seite des Verarbeitungsbehälters 10 ist mit einem selbstklemmenden Deckel 13 verschließbar. Am unteren Ende des Deckels 13 ist eine Entnahmeöffnung 15 und in dessen oberem Bereich eine Einfüllöffnung 14 eingebracht. Nur bei geschlossenem Deckel 13 und geschlossener Einfüllöffnung 14 ist eine Rotation des Werkzeugs 20 möglich, da ansonsten die Stromversorgung des Motors 30 von einem Kontaktelement gesperrt wird. Damit ist gewährleistet, dass ein manueller Eingriff in den Verarbeitungsbehälter 10 nur bei stehendem Werkzeug 20 erfolgen kann.

Als zusätzliches Sicherheitselement ist im unteren Frontblech 43, das die vordere Verkleidung des Gehäuses 40 bildet, ein Not- Stop- Schalter 44 angeordnet, der den Motor 30 außer Betrieb setzt, wenn solche Betriebsstörungen vom Bedienpersonal erkannt werden, die schnelles Eingreifen erfordem. Um die Reaktionsschnelligkeit und -Sicherheit zu erhöhen, verläuft horizontal über dem Not- Stop- Schalter 44 ein Auslösebügel 45 über die gesamte Breite des Frontblechs 43, so dass bei jeder Arbeitsstellung der sich in Kniehöhe befindliche Auslösebügel 45 schnell betätigbar ist.

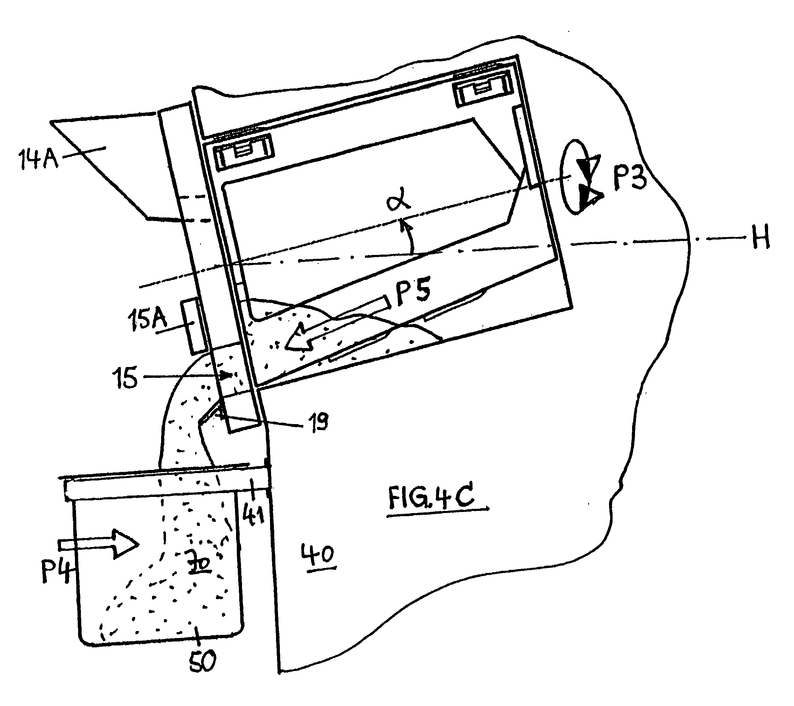

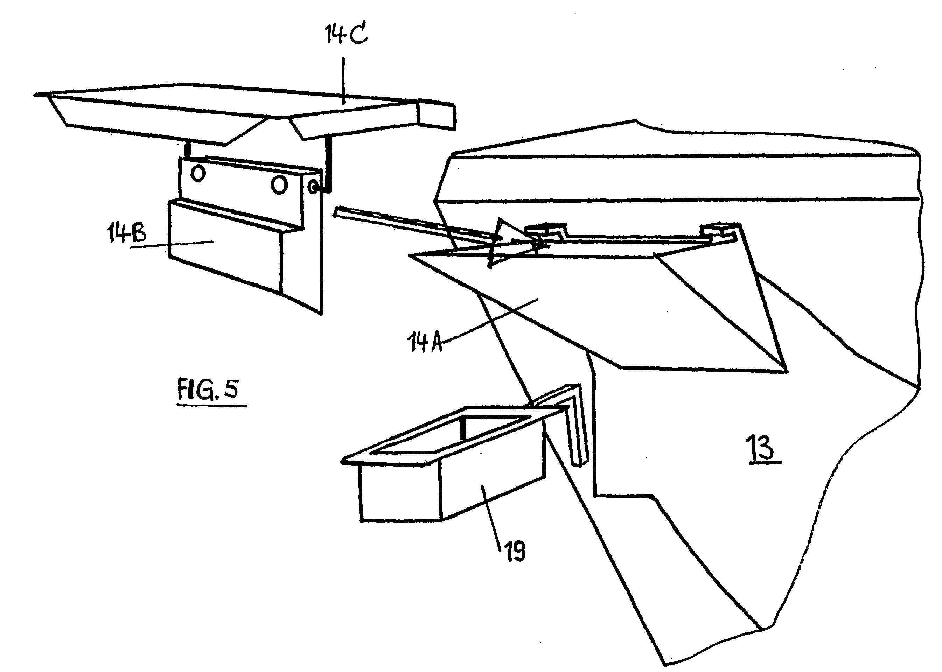

In der Einfüllöffnung 14 ist ein Trichter 14A zum Einfüllen des zu gefrierenden Flüssigkeitsgemisches vorgesehen. Vorzugsweise ist der Trichter 14A aufgeschweißt und bildet somit einen integralen Bestandteil des Deckels 13. Als Verschlußelement des Trichters 14A dient ein Stopfen 14B, der mittels eines Trichterdeckels 14C in den Trichter 14A eingeführt wird und somit unter Kiemmung die Einfüllöffnung 14 absperrt (Fig. 5). Neben dem Trichter 14A ist ein Zutatenbehälter 14D gehalten, der zur Aufnahme von z. B. Schokoladenstreuseln, Krokant u.ä. dient.

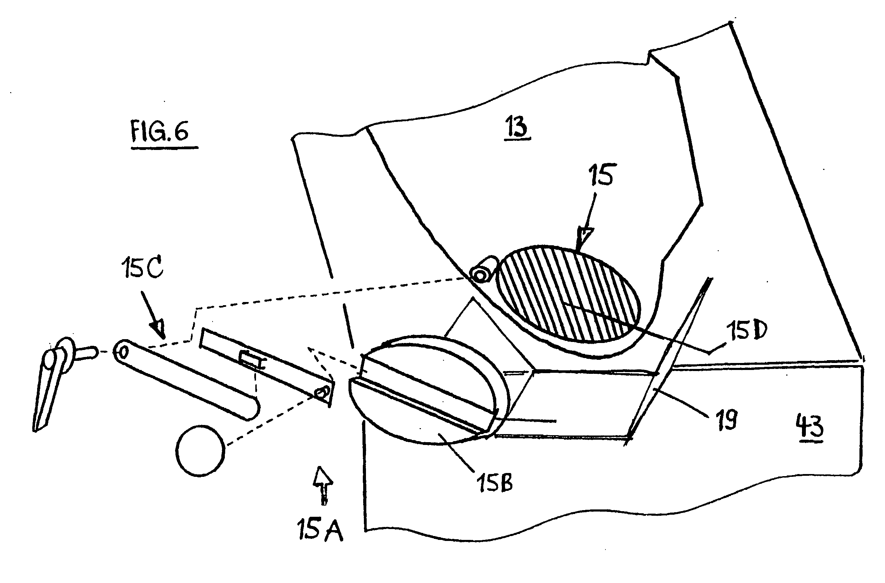

Die Entnahmeöffnung 15 ist mit dem in Figur 6 dargestellten Verschlußelement 15 A verschließbar und weist aus Sicherheitsgründen in ihrem Querschnitt das übliche jalousienartige Gitter 15 D auf, durch das das fertig gefrorene Speiseeis nach außen abgegeben wird. Das Verschlußelement 15A für die Entnahmeöffnung 15 besteht aus einer Verschlußplatte 15B mit einem Spannverschluß 15C, der in Figur 6 in einer Explosionsdarstellung gezeigt ist.

Beim dargestellten Ausführungsbeispiel mit einem Durchmesser des Verarbeitungsbehälters 10 von etwa 30 cm beträgt der Querschnitt der Entnahmeöffnung 15 etwa 150 cm², ein Wert, der erheblich über den bisher verwendeten Werten bei den Vorrichtungen nach dem Stand der Technik liegt und einen wesentlichen Beitrag zur Erhöhung der Qualität des Speiseeises leistet.

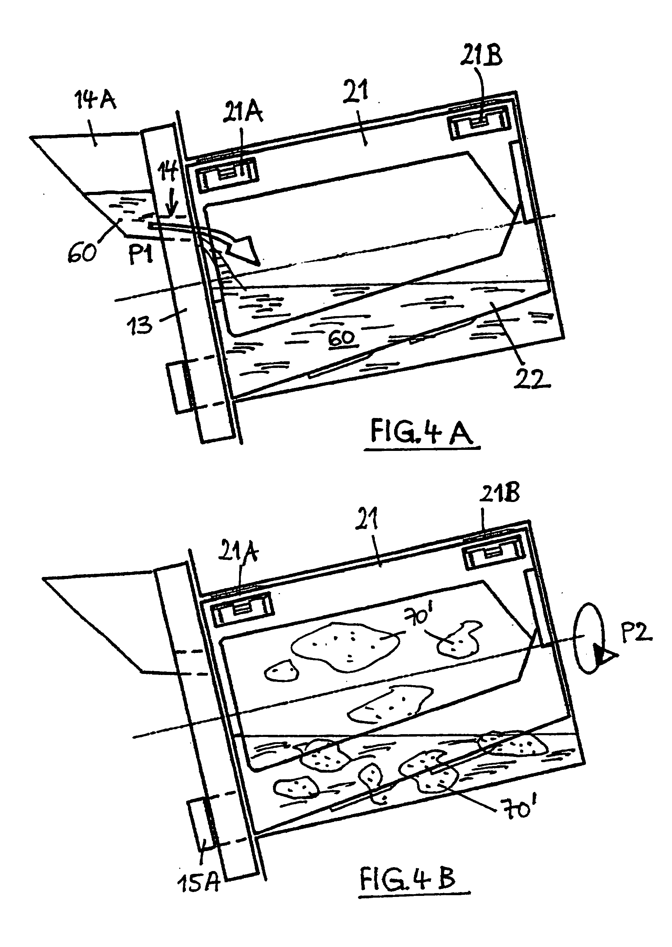

Unterhalb der Entnahmeöffnung 15 sind zwei parallele Haltearme 41,42 am Gehäuse 40 mit verstellbarem Abstand gehalten, zwischen denen ein Aufnahmebehälter 50 für das fertige Speiseeis einschiebbar ist (Figur 4C).

Außerdem ist ein abnehmbares Auslaufblech 19 mit seitlich hochgezogenen Spritzschutzflächen zwischen Entnahmeöffnung 15 und Aufnahmebehälter 50 vorgesehen (Fig. 4C und 6).Das Auslaufblech bewirkt im eingesetzten Zustand auch eine Sicherung des Frontblechs 43.

Das Werkzeug 20 besteht beim dargestellten Ausführungsbeispiel aus drei U-förmig ausgebildeten Spateln 21,22 und 23, die um einen Umfangswinkel γ = 120° gegeneinander versetzt sind, so dass die in Figur 2 dargestellte räumliche Struktur entsteht. Während die Fußpunkte der Spatel 21...23 auf der (nicht dargestellten) Fortsetzung der Antriebswelle 25 im Innenraum des Verarbeitungsbehälters 10 gehalten sind, sind die Spatel in sich derart verdreht, dass ihre jeweilige Stimseite 21C,22C,23C mit einer parallel zur Längsachse L-L verlaufenden Mantellinie M-M (Figur 2) einen zweiten spitzen Winkel β bildet.

### Der Detailaufbau der Spatel ist aus Figur 3 entnehmbar:

Das der Innenfläche des Verarbeitungsbehälters 10 zugewandte Ende des hier beispielhaft dargestellten Spatels 21 ( bei entsprechend gleichem Aufbau der beiden anderen Spatel 22 und 23) ist plattenförmig ausgebildet, wobei in der Stimseite 21C zwei Kanäle 21D,21E eingebracht sind, die in jeweils einer zugehörigen seitlichen Öffnung 21F,21G enden. In diese Kanäle 21D,21E ist jeweils ein Abstreifer 21A,21B einsetzbar, so dass eine bezogen auf den Verarbeitungsbehälter 10 radiale Verschiebung dieser Abstreifer 21A,21B unter der Wirkung von Federn 21H...21K erfolgen kann, d.h., die Abstreifer werden an die Innenwandung des Verarbeitungsbehälters gepresst.

Das untere Ende der Abstreifer 21 A... ist hierbei gabelartig ausgebildet, derart, dass der zur jeweiligen Öffnung 21 F... zeigende Schenkel von außen zugänglich ist, so dass durch Beaufschlagung dieses Schenkels eine Entnahme der Abstreifer aus ihrem zügehörigen Schacht möglich wird, beispielsweise zu Reinigungszwecken oder zum Austausch defekter Teile, was mit der erfindungsgemäßen Lösung sehr einfach und schnell durchzuführen ist.

Anhand der Figuren 4A bis 4C soll nun zunächst die Betriebsweise der erfindungsgemäßen Vorrichtung dargestellt werden:

Zur Einfüllung eines entsprechend den Eigenschaften des späteren Speiseeises zubereiteten Flüssigkeitsgemisches 60 wird die vorgesehene Menge des Flüssigkeitsgemisches 60 in den Trichter 14A eingefüllt, was in Figur 4A dargestellt ist ( Pfeil P1). Während des Einfüllvorganges stehen die Spatel 21...23 auf Grund des abgenommenen Deckels 13. Es ergibt sich ein Pegel des Flüssigkeitsgemischs 60 im Verarbeitungsbehälter 10, wie er etwa in Figur 4A dargestellt ist. Nach dem vollständigen Einfüllen des Flüssigkeitsgemisches 60 wird die Einfüllöffnung 14 mit dem Stopfen 14 B verschlossen.

Es beginnt nun die Verarbeitung des Flüssigkeitsgemisches 60 zu einer Speiseeis- Masse 70, wie dies in Figur 4B schematisch dargestellt ist: Unter Drehung der Spatel 21...23 (Rotationspfeil P2) mit einer relativ niedrigen Umdrehungsgeschwindigkeit von 143 U/Minute erfassen die Spatelflächen das Flüssigkeitsgemisch 60 und streichen Teile davon auf die gekühlte Innenfläche des Verarbeitungsbehälters 10, wo das Flüssigkeitsgemisch anfriert und gefrorene Flächen 70' bildet, die in Figur 4B ebenfalls schematisch punktiert dargestellt sind. Mit jedem Umlauf des Werkzeugs mit den Spateln mit den integrierten Abstreifem werden diese gefrorenen Abschnitte 70 der Speiseeis- Masse 70 sukzessiv wieder von der Innenwandung des Verarbeitungsbehälters 10 abgenommen und gelangen somit wieder in die noch nicht gefrorene Menge des Flüssigkeitsgemischs 60, so dass sich im Laufe der Verarbeitungsdauer das Flüssigkeitsgemisch 60 zunehmend in die gewünschte Menge an Speiseeis- Masse 70 umwandelt, wobei der beschriebene Prozess Aufstreichen/Abkratzen" mehrere Male wiederholt wird, bis eine Speiseeis- Masse 70 der gewünschten Konsistenz und Qualität (insbesondere hinsichtlich konstanter Temperatur) erreicht ist. Bei dem relativ großen Durchmesser von 30 cm des Verarbeitungsbehälters 10, der Anzahl der Spatel und deren Umdrehungsgeschwindigkeit von 143 U/Min. ergibt sich eine minimale Verweildauer des Flüssigkeitsgemischs 60 an der Innenwandung des Verarbeitungsbehälters von etwa 0,42 sec., was ein gutes Anfrieren und Durchfrieren gewährleistet.

Bereits hierbei ist von Bedeutung, dass durch die Neigung der Stirnseiten der Spatel um den zweiten spitzen Winkel β eine Bewegungskomponente entsteht, die dafür sorgt, dass beim Abkratzen der gefrorenen Teile 70' von der Innenwandung des Verarbeitungsbehälters 10 diese unter der Schwerkraftwirkung in den zur Entnahmeöffnung 15 zeigenden Teil zurückfallen, wo sich der noch bestehende Rest an Flüssigkeitsgemisch 60 mit der darin befindlichen bereits gefrorenen Speiseeis- Masse 70 ansammelt.

Wenn dieser Bearbeitungsschritt beendet ist, also die eigentliche Herstellung des Speiseeises, wird das Verschlusselement 15A geöffnet und die Rotationsgeschwindigkeit der Spatel 21... erhöht, vorzugsweise auf einen Wert von etwa 288 U/Minute, was durch den Doppelpfeil P3 zum Ausdruck gebracht werden soll.

Hierbei wird die weitere wichtige Funktion der Neigung der Spatel um den zweiten spitzen Winkel β ersichtlich, nämlich die Erzeugung einer Schubkomponente auf die fertige Speiseeis-Masse 70 (die in den Figuren 4 punktiert dargestellt ist, im Unterschied zu dem schraffiert dargestellten Flüssigkeitsgemisch 60). Durch die Größe der Entnahmeöffnung 15 einerseits und die erhöhte Rotationsgeschwindigkeit der Spatel andererseits, wird die fertige Speiseeis- Masse in geringer Zeit und praktisch rückstandsfrei aus dem Verarbeitungsbehälter 10 in den Aufnahmebehälter 50 ausgeworfen ( Pfeil P5 ), der dann aus den Haltearmen 41,42 herausgezogen und beispielsweise in eine Kühltheke eingesetzt werden kann.

Aus der Beschreibung des Aufbaus und der Arbeitsweise der erfindungsgemäßen Vorrichtung wird deutlich, dass mit dem geschickten Aufbau der Vorrichtung eine nahezu vollautomatische Betriebsweise vom Einfüllen des Flüssigkeitsgemischs 60 bis zur Entnahme des Behälters 50 mit dem fertigen Speiseeis 70 ermöglicht wird, wobei insbesondere die beiden Winkel α und β von Bedeutung sind. Die erfindungsgemäße Vorrichtung verbindet somit den Bearbeitungsvorteil der bisher bekannten horizontal arbeitenden Maschinen mit der herausragenden Speiseeis- Qualität der vertikal arbeitenden Maschinen, bei geeigneter Wahl der Drehzahlen gemäß dem Ausführungsbeispiel wird insbesondere eine sehr schonende, Volumen und Struktur des Speiseeises erhaltende mechanische Beanspruchung erreicht, die sich in einer lang anhaltenden Qualität des Speiseeises bemerkbar macht, und die auch darauf zurückzuführen ist, dass durch die Neigung des Verarbeitungsbehälters um den ersten spitzen Winkel α die Arbeit der Spatel beim Auswerfen des Speiseeises durch die Wirkung der Schwerkraft unterstützt wird, da sich die gross dimensionierte Entnahmeöffnung 15 am Ende des am tiefsten gelegenen Bereichs des Verarbeitungsbehälters 10 befindet.

Die dargestellte Neigung des Verarbeitungsbehälters ermöglicht auch weitere vorteilhafte Ausgestaltungen, beispielsweise die eingangs schon erwähnte äußerst einfache Reinigung durch Aussprühen nach Erwärmung der Kesselwandung, wo beispielsweise hinter dem Werkzeug automatisch eingespültes Frischwasser nach der Reinigung der Innenfläche des Verarbeitungsbehäiters 10 durch die Entnahmeöffnung 15 wieder abfließen kann. Auch hierbei erweist sich die fugenlose Gestaltung des Verarbeitungsbehälters 10 als sehr hilfreich, so dass der für das Schweißen erforderliche Herstellungsaufwand lohnend ist, da die eingangs geschilderten Problemzonen des Anschlusses verschiedener Bauteile untereinander im Bereich des Verarbeitungskessels vermieden werden.

Der konstruktive Aufbau des Verarbeitungsbereichs mit wenigen verschweißten Teilen ermöglicht somit eine wirtschaftliche Herstellung und gewährleistet die Erfüllung aller hygienischer Anforderungen.

Darüber hinaus erfordern die oben beschriebenen, ohnehin schon weitgehend automatisierten Verarbeitungsabläufe nur noch Bedienungsschritte in einem eng begrenzten Bereich, der so gewählt werden kann, dass die Bedienung der erfindungsgemäßen Vorrichtung unmittelbar im Zugriffsbereich einer Bedienungsperson ohne Bücken oder Strecken und ohne längeres Halten von Lasten erfolgen kann, so dass die Handhabung sehr komfortabel ist und gesundheitliche Beeinträchtigungen des Bedienpersonals ausgeschlossen sind.

## Patentansprüche

1. Vorrichtung zur diskontinuierlichen Herstellung von Speiseeis aus einem Flüssigkeitsgemisch (60), mit einem Verarbeitungsbehälter (10), in dem gleich beabstandete Spatel (21,22,23) mit integrierten Abstreifern zum wiederholten Auftrag und Abkratzen des Flüsslgkeitsgemischs von der gekühlten Innenwandung des Verarbeitungsbehälters drehbar gehalten sind, sowie mit einer Einfüllöffnung (14) für das Flüssigkeitsgemisch und einer Entnahmeöffnung (15) for die Abgabe des Speiseeises (70) aus dem Verarbeitungsbehälter, **dadurch gekennzeichnet, dass** die Langsachse (L-L.) des Verarbeitungsbehälters (10) um einen ersten spitzen Winkel (α) gegenüber der Horizontalen (H) geneigt ist, und dass die Spatel (21,22,23) derart ausgebildet und gehalten sind, dass ihre Stimselten (21C,22C,23C) mit der parallel zur Längsachse (L-L) verlaufenden Mantellinie (M-M) des Verarbeitungsbehälters (10) einen zweiten spitzen Winkel (β) einschließen, so dass sie eine kontinuierliche Förderung der gefrörenen Teile (70') zur an der tiefsten Stelle des Verarbeitungsbehälters (10) angeordneten Entnahmeöffnung (15) hin bewirken, wobei diese Teile (70') unter der Schwerkraftwirkung sukzessiv von der Innenwandung in den zur Entnahmeöffnung (15) zeigenden Teil des Verarbeitungsbehälters (10) zurückfallen, wo sie sich mit dem noch bestehenden Rest an Flüssigkeitsgemisch (60) ansammein und im Laufe der Verarbeitungsdauer in die Speiseeismasse (70) umgewandelt werden.

2. Vorrichtung nach Anspruch 1, **dadurch gekennzeichnet, dass** die Stirnselten (21C,22C,23C) der drei Spatel mindestens zwei Abstreifer (21A...) aufweisen, die in jeweils einem Kanal (21D...) gehalten und unter Federeinwirkung radial gegen die Innenwandung des Verarbeitungsbehälters (10) gedrückt werden.

3. Vorrichtung nach Anspruch 2, **dadurch gekennzeichnet, dass** unterhalb jedes Kanals (21D...) in einer Seitenfläche der Spatel eine Öffnung (21F...) eingebracht ist, in die der zugehörige Kanal (21D...) geführt ist, so dass das untere Ende des zugehörigen Abstreifers (21 A...) von oben in die Öffnung (21F) eintaucht und dort unverlierbar gehalten wird.

4. Vorrichtung nach Anspruch 2 und 3, **dadurch gekennzeichnet, dass** das untere Ende der Abstreifer (21A...) gabelartig ausgebildet ist, derart, dass der zur Öffnung (21F) zeigende Schenkel von außen zugänglich ist.

5. Vorrichtung nach Anspruch 1, **dadurch gekennzeichnet, dass** der Querschnitt der Entnahmeöffnung (15) mindestens 100 cm² beträgt.

6. Vorrichtung nach Anspruch 1, **dadurch gekennzeichnet, dass** unterhalb der Entnahmeöffnung (15) zwei parallele Haltearme (41, 42) am Gehäuse (40) mit verstellbarem Abstand gehalten sind, zwischen denen ein Aufnahmebehälter (50) für das Speisseis (70) einschiebbar ist.

7. Vorrichtung nach Anspruch 1, **dadurch gekennzeichnet, dass** der erste Winkel (α) etwa 20° beträgt.

8. Vorrichtung nach Anspruch 1, **dadurch gekennzeichnet, dass** der zweite Winkel (β) etwa 30° beträgt.

9. Vorrichtung nach Anspruch 1, **dadurch gekennzeichnet, dass** der Durchmesser des Verarbeitungsbehälters (10) etwa 30 cm beträgt.

10. Vorrichtung nach Anspruch 1, **dadurch gekennzeichnet, dass** die Rotationsfrequenz des Werkzeugs (20) zwischen einer ersten Rotationsfrequenz von vorzugsweise 143 U/min zur Verarbeitung des Flüssigkeitsgemischs (60) und einer zweiten, höheren Rotationsfrequenz von vorzugsweise 288 U/mln zum Auswurf der fertigen Speisseismasse (70) umschaltbar ist.

11. Vorrichtung nach Anspruch 1, **dadurch gekennzeichnet, dass** unterhalb der Entnahmeöffnung (15) ein abnehmbares Auslaufblech (19) angebracht ist.

12. Vorrichtung nach Anspruch 1, **dadurch gekennzeichnet, dass** im Bereich des Deckels (13) ein Zutatenbehälter (14D) angeordnet ist.

13. Vorrichtung nach Anspruch 1, **dadurch gekennzeichnet, dass** zu Reinigungszwecken Einrichtungen zur Erwärmung des Verarbeitungsbehälters (10) und zur Einspritzung einer Reinigungsflüssigkeit in diesen vorgesehen sind.

14. Vorrichtung nach Anspruch 1, **dadurch gekennzeichnet, dass** an der Einfüllöffnung (14) ein Trichter (14A) angeschweißt ist, und dass die Einfüllöffnung (14) mit einem unverlierbar gehaltenen Verschlusselement verschließbar ist.

15. Vorrichtung nach Anspruch 14, **dadurch gekennzeichnet, dass** das Verschlusselement im Trichter (14A) einen Trichterdeckel (14C) und einen derart gehaltenen Stopfen (14B) beinhaltet, der zwischen Trichter (14A) und Gehäuse (40) klemmend gehalten ist.

16. Vorrichtung nach Anspruch 14 und 15, **dadurch gekennzeichnet, dass** der Motor (30) des Werkzeugs (20) über ein Kontaktelement gesteuert wird, das eine Rotation des Werkzeugs (20) nur bei geschlossenem Deckel (13) und geschlossener Einfüllöffnung (14) gestaltet.

17. Vorrichtung nach Anspruch 1, **dadurch gekennzeichnet, dass** das Werkzeug (20) lösbar im Verarbeitungsbehälter (10) gehalten und mit einer Antriebswelle (25) verbindbar ist.

18. Vorrichtung nach Anspruch 1, **dadurch gekennzeichnet, dass** der Verarbeitungsbehälter (10) aus Edelstahl ist und alle mit dem Speiseeis in Berührung kommanden Bauteile und Bereiche fugenlos miteinander verschweißt sind.

19. Vorrichtung nach Anspruch 1, **dadurch gekennzeichnet, dass** Einfüllöffnung (14), Trichter (14A) und dessen Verschlusselement, sowie Entnahmeöffnung (15) mit Verchlusselement (15A) Teil des Deckels (13) des Verarbeitüngsbehälters (10) sind.

## Claims

1. Apparatus for the batch production of ice-cream from a liquid mixture (60), said apparatus having a processing container (10), in which evenly spaced-apart spatulas (21,22,23), provided with integral scrapers, are rotatably retained for the repeated application and scraping of the liquid mixture from the cooled internal wall of the processing container, as well as having a feed opening (14) for the liquid mixture and a discharge opening (15) for discharging the ice-cream (70) from the processing container, **characterised in that** the longitudinal axis (L-L) of the processing container (10) is inclined relative to the horizontal (H) by a first acute angle (α), and **in that** the spatulas (21,22,23) are configured and retained in such a manner that their end faces (21C,22C,23C) form a second acute angle (β) with the generatrix (M-M) of the processing container (10) extending parallel to the longitudinal axis (L-L), so that said spatulas effect a continuous conveyance of the frozen constituent parts (70') towards the discharge opening (15) disposed at the lowest location of the processing container (10), said constituent parts (70') dropping back successively, by the effect of gravity, from the internal wall into the portion of the processing container (10) pointing to the discharge opening (15), where said constituent parts accumulate with the remaining liquid mixture (60) and are converted into the ice-cream composition (70) during the course of the processing period.

2. Apparatus according to claim 1, **characterised in that** the end faces (21C,22C,23C) of the three spatulas have at least two scrapers (21A...) which are retained in a respective channel (21D...) and are urged radially towards the internal wall of the processing container (10) by the action of a spring.

3. Apparatus according to claim 2, **characterised in that** an opening (21 F...) is provided beneath each channel (21 D...) in a lateral face of the spatulas, the associated channel (21D...) extending into said opening so that the lower end of the associated scraper (21 A...) extends into the opening (21 F) from above and is non-detachably retained there.

4. Apparatus according to claims 2 and 3, **characterised in that** the lower end of the scrapers (21A...) has a bifurcated configuration such that the portion pointing towards the opening (21F) is accessible from externally.

5. Apparatus according to claim 1, **characterised in that** the cross-section of the discharge opening (15) is at least 100 cm².

6. Apparatus according to claim 1, **characterised in that** two parallel retaining arms (41, 42) are retained on the housing (40) beneath the discharge opening (15) with an adjustable spacing therebetween, and an accommodation container (50) for the ice-cream (70) is insertable between said arms.

7. Apparatus according to claim 1, **characterised in that** the first angle (α) is substantially 20°.

8. Apparatus according to claim 1, **characterised in that** the second angle (β) is substantially 30°.

9. Apparatus according to claim 1, **characterised in that** the diameter of the processing container (10) is substantially 30 cm.

10. Apparatus according to claim 1, **characterised in that** the rotational frequency of the tool (20) is switchable between a first rotational frequency of preferably 143 rev/min for processing the liquid mixture (60) and a second, higher rotational frequency of preferably 288 rev/min for the ejection of the finished ice-cream mass (70).

11. Apparatus according to claim 1, **characterised in that** a removable sheet metal tray (19) is attached beneath the discharge opening (15).

12. Apparatus according to claim 1, **characterised in that** an ingredient container (14D) is disposed in the region of the cover (13).

13. Apparatus according to claim 1, **characterised in that**, for cleaning purposes, means for heating the processing container (10) and for injecting a cleaning fluid are provided in said container.

14. Apparatus according to claim 1, **characterised in that** a hopper (14A) is welded to the feed opening (14), and **in that** the feed opening (14) is closable with a non-detachably retained closure element.

15. Apparatus according to claim 14, **characterised in that** the closure element in the hopper (14A) includes a hopper cover (14C) and a stopper (14B), which is retained thereon and is clampingly retained between hopper (14A) and housing (40).

16. Apparatus according to claims 14 and 15, **characterised in that** the motor (30) of the tool (20) is controlled via a contact element which permits the tool (20) to rotate only when the cover (13) is closed and the feed opening (14) is closed.

17. Apparatus according to claim 1, **characterised in that** the tool (20) is detachably retained in the processing container (10) and is connectable to a drive shaft (25).

18. Apparatus according to claim 1, **characterised in that** the processing container (10) is formed from stainless steel, and all of the structural parts and regions which come into contact with the ice-cream are welded seamlessly together.

19. Apparatus according to claim 1, **characterised in that** feed opening (14), hopper (14A) and its closure element, as well as discharge opening (15) with closure element (15A), are part of the cover (13) of the processing container (10).

## Revendications

1. Dispositif pour produire de la crème glacée de manière discontinue à partir d'un mélange liquide (60), présentant une cuve de transformation (10), dans laquelle des spatules (21, 22, 23) équidistantes à racleurs intégrés sont tenues de manière rotative pour, de manière répétée, appliquer et racler de la paroi intérieure réfrigérée de la cuve de transformation le mélange liquide, et présentant une ouverture de remplissage (14) pour le mélange liquide et une ouverture de prélèvement (15) pour déverser la crème glacée (70) hors de la cuve de transformation, **caractérisé en ce que** l'axe longitudinal (L-L) de la cuve de transformation (10) est incliné d'un premier angle aigu (α) par rapport à l'horizontale (H), et que les spatules (21, 22, 23) sont réalisées et tenues de telle façon que leurs tranches (21C, 2C, 23C) forment avec la génératrice (M-M) de la cuve de transformation (10), s'étendant parallèlement à l'axe longitudinal (L-L), un second angle aigu (β), de sorte qu'elles provoquent un acheminement continu des fractions givrées (70') en direction de l'ouverture de prélèvement (15) disposée au point le plus bas de la cuve de transformation (10), ces fractions (70') retombant, sous l'effet de la gravité, successivement de la paroi intérieure vers la partie de la cuve de transformation (10) orientée vers l'ouverture de prélèvement (15), où elles s'accumulent avec le reste encore existant de mélange liquide (60) et sont transformées au cours de la durée de transformation en la masse de crème glacée (70).

2. Dispositif selon la revendication 1, **caractérisé en ce que** les tranches (21C, 22C, 23C) des trois spatules présentent au moins deux racleurs (21A...), qui sont tenus chacun dans un canal (21D...) et sont pressés, sous l'effet d'un ressort, radialement contre la paroi intérieure de la cuve de transformation (10).

3. Dispositif selon la revendication 2, **caractérisé en ce que**, en dessous de chaque canal (21D...), est ménagée dans une face latérale des spatules une ouverture (21F...) dans laquelle est conduit le canal (21D...) correspondant, de telle sorte que l'extrémité inférieure du racleur (21A...) correspondant pénètre depuis le haut dans l'ouverture (21F) et y est tenue de manière imperdable.

4. Dispositif selon la revendication 2 et 3, **caractérisé en ce que** l'extrémité inférieure des racleurs (21A...) est réalisée en forme de fourche, de telle façon que la branche orientée vers l'ouverture (21F) est accessible de l'extérieur.

5. Dispositif selon la revendication 1, **caractérisé en ce que** la section transversale de l'ouverture de prélèvement (15) mesure au moins 100cm².

6. Dispositif selon la revendication 1, **caractérisé en ce que**, en dessous de l'ouverture de prélèvement (15), deux bras de maintien (41, 42) parallèles, entre lesquels peut être inséré un bac (50) pour la crème glacée (70), sont tenus à distance réglable sur le carter (40).

7. Dispositif selon la revendication 1, **caractérisé en ce que** le premier angle (α) mesure environ 20°.

8. Dispositif selon la revendication 1, **caractérisé en ce que** le second angle (β) mesure environ 30°.

9. Dispositif selon la revendication 1, **caractérisé en ce que** le diamètre de la cuve de transformation (10) mesure environ 30 cm.

10. Dispositif selon la revendication 1, **caractérisé en ce que** la fréquence de rotation de l'outil (20) peut être commutée entre une première fréquence de rotation de 143 tr/min de préférence, pour transformer le mélange liquide (60), et une seconde fréquence de rotation de 288 tr/min de préférence, pour délivrer la masse de crème glacée (70) prête.

11. Dispositif selon la revendication 1, **caractérisé en ce qu'**une tôle de déversement (19) amovible est montée en dessous de l'ouverture de prélèvement (15).

12. Dispositif selon la revendication 1, **caractérisé en ce qu'**un conteneur d'ingrédients (14D) est disposé dans la zone du couvercle (13).

13. Dispositif selon la revendication 1, **caractérisé en ce que** des installations pour le réchauffage de la cuve de transformation (10) et pour l'injection d'un liquide de nettoyage dans celle-ci sont prévus à des fins de nettoyage.

14. Dispositif selon la revendication 1, **caractérisé en ce qu'**une trémie (14A) est soudée à l'ouverture de remplissage (14), et que l'ouverture de remplissage (14) peut être fermée par un élément obturateur tenu de manière imperdable.

15. Dispositif selon la revendication 14, **caractérisé en ce que** l'élément obturateur dans la trémie (14A) comprend un couvercle de trémie (14C) et un bouchon (14B) tenu sur celui-ci, qui est tenu par serrage entre la trémie (14A) et le carter (40).

16. Dispositif selon la revendication 14 et 15, **caractérisé en ce que** le moteur (30) de l'outil (20) est commandé par un élément de contact qui ne permet une rotation de l'outil (20) que couvercle (13) fermé et ouverture de remplissage (14) fermée.

17. Dispositif selon la revendication 1, **caractérisé en ce que** l'outil (20) peut être tenu de manière détachable dans la cuve de transformation (10) et peut être relié à un arbre d'entraînement (25).

18. Dispositif selon la revendication 1, **caractérisé en ce que** la cuve de transformation (10) est en acier spécial et que tous les composants et les zones venant en contact avec la crème glacée sont soudés ensemble, sans joint.

19. Dispositif selon la revendication 1, **caractérisé en ce que** l'ouverture de remplissage (14), la trémie (14A) et son élément de fermeture, ainsi que l'ouverture de prélèvement (15) avec élément obturateur (15A) font partie du couvercle (13) de la cuve de transformation (10) .
